# EUROPEAN PATENT APPLICATION

(11) **EP 2 822 272 A1**
(43) Date of publication of application: **07.01.2015**
(21) Application number: 13305930.3
(22) Date of filing: 01.07.2013
(51) Int. Cl.: H04N 7/18, H04N 21/218, H04N 21/234

(54) **Method and network using source apparatus deployment**

(71) Applicant: ALCATEL LUCENT, 92100 Boulogne-Billancourt (FR)
(72) Inventor: Zontrop, Pascal, 3200 Aarschot (BE); Van Raemdonck, Wolfgang, 2140 Antwerpen (BE)
(74) Representative: Grootscholten, Johannes A.M.

(57) **Abstract**

The invention relates to a method of selecting a source from source apparatuses, which generate data, for processing of said data by a processing device, wherein the source apparatuses and the processing device are connected in a network, comprising the steps of: selecting a source apparatus from the source apparatuses as a selected source apparatus for processing of data from the selected source apparatus by the processing device, the selecting being based on criteria related to content of data from the selected source apparatus; pre-selecting a source apparatus from the source apparatuses as a pre-selected source apparatus for subsequent processing of data from the pre-selected source apparatus by the processing device, based on criteria related to real world knowledge information; and selecting a source apparatus from the selected source apparatus and the pre-selected source apparatus as the selected continued source apparatus for continued processing of data by the processing device.

## Description

### FIELD OF THE INVENTION

The present invention relates to the field of networks, such as cloud networks and/or wired or wireless networks, and therein of utilization of resources, in particular source apparatuses which generate data to be processed, such as but not limited to surveillance cameras or face detectors in for instance a static grid.

### BACKGROUND

Currently available technologies that try to push processing to the edge of the cloud or other type of network rely exclusively on system knowledge. Such prior art technologies aim at arranging processing as close as possible to a location in network terms where such processing will be needed, so as to reduce distances, over which large amounts of data need to be transmitted, and amounts of data that have to be transmitted to a centralized server.

For instance in the case of a grid of surveillance cameras or face detectors it may be desired to be able to track movements of persons or phenomena or objects like automobiles. Currently, the only available possibility known to the inventors of the present invention, is having to constantly process and analyze all data from the cameras or detectors. Although cameras and detectors are explicitly referred to as a possible field of use of the present invention, the scope of the invention is, according to the definitions of the invention in the appended claims, in particular the independent claims, by no means restricted to this or any neighboring field or use.

In particular (though not exclusively) in the field of sensor, detector and camera networks huge amounts of real time streams of data/footage are required to be processed constantly, and at a considerable distance from the cameras, detectors and sensors or sensor nodes. This imposes severe requirements on the capabilities of these networks, in terms of transmission capacity and processing power. Cameras, detectors and sensor nodes do not have sufficient computational power available to perform the required processings to enable complex tasks like person or object or phenomenon identification in images corresponding with the data. At best cameras and sensor nodes are able to perform only limited amounts of processing/analysis on data streams captured there with. Optimizations can be obtained by reusing the output of analyses over different applications and by ensuring that only streams are processed, that are of value for the envisaged use thereof, such as specific applications. A logical and obvious step to attempt to improve over the prior art would be for the skilled person to contemplate enhancing computational power at the source apparatuses, like the cameras, detectors and sensors or sensor nodes. However, although such an approach would provide some relief in terms of computational power to be provided in centralized processing devices and/or apparatuses, the cameras, sensors or sensor nodes and detectors would remain to be isolated in the sense that the these remain vulnerable to malicious attacks and with greater damage effect, if these source apparatuses are enhanced compared with the relatively simple contemporary cameras, detectors and sensors. Moreover, such a predictable approach also resolve no issues with respect to communication of target persons, objects, phenomena and the like between the source apparatuses and a coordinating facility, but moreover also does not contribute any solution for the handover of detection for tracking from one of these source apparatuses to another. More in particular, if an object or person under surveillance leaves the field of view of one camera, the prior art in itself and the possible solution for computational capacity do not resolve the challenge of how to determine which of the other cameras and detectors and sensors then takes over the surveillance, other than by processing all of the data from all of the source apparatuses again.

In summary, the prior art and any possible computational power solution do not contribute any solution to the problem of determining or detecting where the analysis is needed at one particular time, and further also the even bigger challenge of determining or detecting where analysis will be needed next.

It is acknowledged in this respect, that in the research field of the cloud placement problems, many systems and algorithms have been developed, aimed at optimizing placement within the prior art networks of computational power. These algorithms analyze where the data/computation is coming from and where it is needed to go and/or vice versa, and attempt to predict where computational power may best be allocated at any given time and also on the short or middle long term. All of these systems are limited to system knowledge. System knowledge is information about the system itself, for instance internal memory or CPU speed of a node. At most these algorithms have geospatial information about where cameras, sensors or sensor nodes and detectors are placed.

However, in the field of sensor/camera networks more is needed than just system knowledge to determine where analysis of data generated by a plurality of cameras, detectors and sensors or sensor nodes should be performed and, especially for tracking fast moving phenomena and objects, where this analysis will be needed next (e.g. when attempting to capture a moving object with a grid of camera's or a phenomenon that we have some knowledge about: the probability it can occur at certain times and/or at certain places).

### SUMMARY OF THE INVENTION

The present invention relates to a method of selecting a source apparatus from a plurality of source apparatuses, which generate data, for processing of said data by a processing device, wherein the plurality of source apparatuses and the processing device are connected in a network, comprising the steps of: selecting a source apparatus from the plurality of source apparatuses as a selected source apparatus for processing of data from the selected source apparatus by the processing device, the selecting being based on criteria related to content of data from the selected source apparatus; pre-selecting a source apparatus from the plurality of source apparatuses as a pre-selected source apparatus for subsequent processing of data from the pre-selected source apparatus by the processing device, based on at least criteria related to real world knowledge information; and selecting a source apparatus from the selected source apparatus and the pre-selected source apparatus as the selected continued source apparatus for continued processing of data from the selected continued source apparatus by the processing device, as well as a
network, comprising: a plurality of source apparatuses, which generate data for processing; a processing device configured to process the data generated by at least one of the plurality of source apparatuses; and a deployment controller, wherein the plurality of source apparatuses, the processing device and the deployment controller are connected in a network, and wherein the deployment controller is configured to implement the method according to the present invention.

Relative to prior art technologies where processing is arranged as closely as possible to a location in network terms where such processing is going to be needed, so as to reduce distances over which large amounts of data need to be transmitted, and amounts of data that have to be transmitted to a centralized server, the present invention proposes to optimize processings even further by also using real world knowledge, i.e. knowledge about the real world outside the system.

Additionally or alternatively, the invention allows for detecting and tracking of certain phenomena/objects through sensor/camera networks, without having to run an analysis on of ALL of the data/video sources. Also to achieve this objective of the invention, information is to be used about the things that are happening outside of the system, i.e. in the real world.

In summary, the present invention provides a generic method to use knowledge of the real world, subject to for instance queries and/or observations, to better provision the computing resources required for processing observation. The present invention adds another axis or dimension knowledge about or from the real world in terms of intelligence, relative to previous systems. The real world knowledge may be considered as orthogonal to system knowledge, to achieve the highest possible accuracy and system load reduction to explore and apply run-time reuse and sharing of the data processing units. These optimizations can reduce cloud processing and/or network traffic.

More in particular, when a source apparatus and/or the data originating therefrom is selected on the basis of content related criteria for following, tracking or identifying an object, person or phenomenon, such an object, person or phenomenon on may move, and the step of pre-selecting a subsequent source apparatus may entail preselecting a number of the plurality of source apparatuses eligible for picking up the objects, person or phenomenon after it has moved from a detection range of the originally selected source apparatus. Such a pre-selection of a number from the plurality of source apparatuses will be performed on the basis of worldly considerations or real world knowledge, thereby reducing considerably the eligible number of source apparatuses that could or would be able to pick up the objects, person or phenomenon. Thereby it is rendered superfluous to investigate the contents of the data from all of the source apparatuses to recapture the person, object or phenomenon and a considerable reduction in data traffic and processing is thereby achieved.

Within the scope of protection and the range of possible embodiments, all falling within the definition of the appended independent method and network claims, numerous additional and/or alternative embodiments are possible and feasible, some of which have been defined in the appended dependent claims.

For instance, in an embodiment of the method according to the invention, the step of selecting a source apparatus comprises disregarding at least one source apparatus from the plurality of source apparatuses, based on criteria related to real world knowledge information, and/or in a corresponding embodiment of the network according to the invention the deployment controller is configured for this task or step.

As a consequence, real world knowledge allows for disregarding a number of the plurality of source apparatuses, when searching for instance for a person, object or phenomenon. For example, when trying to identify a location of a car, knowing any car will run on land, using data from the plurality of source apparatuses, the number of source apparatuses that are oriented at the air or sea or a river can be disregarded, to reduce the amount of processing required to actually identify the car on land.

For instance, an additional or alternative embodiment of the method according to the invention further comprising ending the step of selecting a source apparatus from the plurality of source apparatuses as a selected source apparatus, when a source apparatus is found to comply with the criteria related to content of processed data there from, and/or in a corresponding embodiment of the network according to the invention the deployment controller is configured for this task or step.

This aspect of the present invention ensures a further reduction in amount of processing, required to identify an object, phenomenon on or person in the many streams of data, originating from the plurality of source apparatuses.

For instance, an additional or alternative embodiment of the method according to the invention further comprising the step of returning to the step of selecting a source apparatus from the plurality of source apparatuses as a selected source apparatus, when the step of selecting a source apparatus from the selected source apparatus and the pre-selected source apparatus fails to yield a selected continued source apparatus and/or in a corresponding embodiment of the network according to the invention the deployment controller is configured for this task or step.

In particular a loop process is enabled in such an embodiment, where a selected source apparatus and a number of preselected source apparatuses from the plurality of source apparatuses are constantly reviewed or the data there from is constantly inspected, to enable tracking of the person, object or phenomenon. The source apparatus from the selected and preselected source apparatuses, yielding the best results, will be selected to be allowed to provide the director for processing and further tracking or following. However, when none of the selected and preselected source apparatuses yields any results, this embodiment of the present invention provides for the measure to broaden the scope of the search or query to include data from all of the source apparatuses, but only if tracking or following a person, object or phenomenon fails on the basis of selections and preselections of source apparatuses based on respectively data content and real-world knowledge. In such a case the search query is broadened by inspecting or reviewing data from more if not all of the source apparatuses, essentially regardless of the real world knowledge used to define a pre-selection and mainly on the basis of the data content of the information originating from all of the source apparatuses. It should be noted, that an intermediate step is also possible, where a search or query is geographically broadened first, to broaden the range of the pre-selection, or any other consideration than geographical range can also or alternatively play a role. Thus, step-by-step, the search query can be broadened until all real world knowledge criteria are released to revert back to a situation where only data content is reviewed or inspected to identify, track and or follow an object, person and/or phenomenon.

The network according to the present invention may be or comprise one or more than one of a cloud system, a wired network, a wireless network.

The network according to the present invention may be such that the plurality of source apparatuses comprises a set of cameras, such as surveillance cameras or face detectors, and the processing device is configured for image processing of data from at least one camera of the set of cameras.

In general, regardless of an embodiment of the invention in the shape and form of a method and/or of a network, the invention may exhibit the feature that the real world knowledge information is information from the group, comprising: information on the nature of the surroundings of a source apparatus; orientations of individual sensors, detectors and cameras; and the like. Many other real world knowledge aspects could and can be equally taken into account, according to the present invention.

Further it is noted here that the present invention also relates to a record carrier comprising a program for performing the method according to any embodiment of the present invention, when executing the program on a computer.

On the basis of the preceding general indications in accordance with the definitions of the appended claims of the present invention, below are more detailed description will follow of more particular and specific embodiments, to which the present invention is by no means restricted or limited, and where such particular and specific embodiments are merely provided in an exemplary manner to provide more insight. Other possible embodiments according to the present invention are by no means excluded from the scope of the present invention according to the appended claims, in particular the appended independent claims, as a consequence of the following description of more detailed and particular embodiments.

### BRIEF DESCRIPTION OF THE DRAWING

Figure 1 shows a flowchart representing a method in an exemplary embodiment according to the present invention;
Figure 2 shows a schematic representation of a network in an exemplary embodiment according to the present invention;
Figure 3 shows a prior art solution to query processing;
Figure 4 represents listing, corresponding with the prior art solution of figure 3;
Figure 5 shows a representation of sample query and corresponding composition of multimedia analyzers, sensors streams and event processing nodes;
Figure 6 shows a query processing data flow; and
Figure 7 shows concept construction and reasoning.

### DESCRIPTION OF EMBODIMENTS

The present invention optimizes cloud placement problems (e.g. using a static camera grid to keep tracking a moving object, person or phenomenon, without continuously analyzing all the video streams) for instance within sensor/camera networks. This is achieved by creating a deployment controller that does not only use system knowledge (e.g. knowing where the camera is and in what direction it is filming) but also uses real world knowledge (knowing where the object is, what direction and speed it is moving at, weather it moves in a linear way, in a plane or three dimensionally, and the like). With the help of such a smart deployment controller, not only create an optimal accuracy is provided on where to place available computational power of the network to produce less data traffic, but it is further also possible to remove any redundancy. This means that computation power is exclusively made available and actually used, where the computational power is really needed.

As a basis for this optimization any system may be employed that can handle fast moving data (complex event processing) as well as high level semantic data, in particular for implementation of a Knowledge base containing real world knowledge information, preferably in a very dynamic way. More preferably, such a system is able to gather and store new knowledge about outside events.

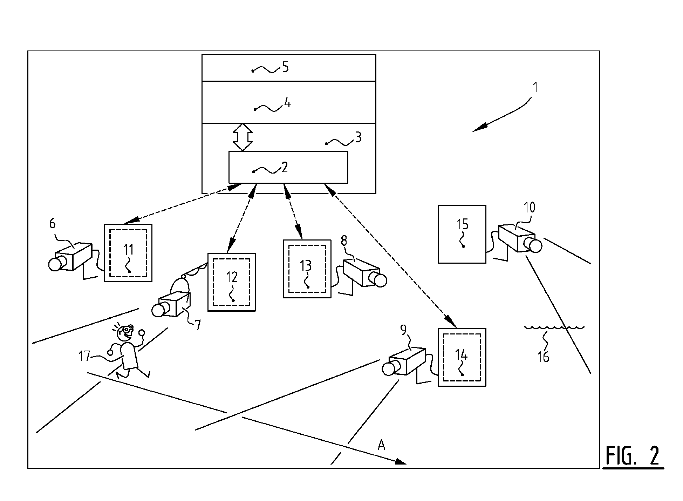

In the embodiment of for instance figure 2 a employment controller 2 is arranged in the data-layer 3 of such a schematically represented network 1. Further the network 1 comprises a query layer 5 and the plurality of cameras/sensors 6 - 10, of which cameras/sensors 6 - 9 are each provided with or incorporate their own face detector 11 - 14. The camera/sensor 10 is directed at a schematically represented water body 16, like a river or the sea, and has a different primary image processor 15, for instance a heat sensing infra-red image processor. Image processors at or in cameras/sensors 6 - 10 or usually simple to reduce or minimize network costs and vulnerability. Consequently, actual more detailed image processing is performed at a proximal location containing the deployment controller 2 in the data layer 2 with the knowledge base 4 and the query layer 5, as depicted in figure 2.

It is to be noted here, that an entire network can share knowledge bases over several such locations, each having at least a deployment controller 2. The knowledge base 4 could even be maintained at a central location, or a central location could be appraised of any situation by dispersed assemblies of a deployment controller 2 in a data layer 3 with the knowledge base 4 and a query layer 5, to ensure that the knowledge base 4 contains information about the real world surrounding the camera rise/sensors 6 - 10. However, other real world knowledge considerations could also be relevant for the proper functioning of the present invention, for instance regarding the nature of phenomena or objects or persons to be tractor followed or identified in the data streams from the plurality of cameras/sensors 6 - 10.

The deployment controller 2 gets its information from the knowledge base 4. This knowledge base 4 does not only contain the system knowledge but also the contextual information about the world that is being registered/sensed/filmed by the censorious/cameras 6 - 10, which is the real world knowledge. From this real world knowledge, the deployment controller 2 can derive information about objects, such as person 17 that are being queried, sought or tracked. For an alternative example relative to the person 17 example, the knowledge base 4 may contain the following information about the concept car":
- it can only drive on land and not fly over obstacles or float on water;
- it can't jump from one location to the other but has to follow a linear path there between;
- it can't disappear (always has a certain location); and
- it has a license plate that is unique.

This knowledge allows for optimization of the bandwidth and computation to detect the phenomena/object. For example, to detect a car, it is not necessary to analyze data from camera 10 that isn't aimed at land. This enables the invention to keep tracking the object or person 17. In the example of a car, the car has to move in a linear path so it is possible to estimate the destination thereof and predict where the car will appear next in images from which of the cameras 6 - 10 in the sensor/camera network 1.

For extra optimization the deployment controller 2 also detects wether there is a certain repetition or phenomena present in the data or source selection. For instance a specific car driving on a circuit will keep passing the same cameras 6 - 10 lap after lap. Whenever such occurrences are detected, possibilities are greatly enhanced for optimization with almost certain prediction of the next source apparatus camera/sensor 6 - 10.

Whenever a new source apparatus sensor or camera 6 - 10 is added to the network 1, the deployment controller 2 checks wither the new camera can be relevant for the sequence. If it is a good candidate (i.e. location is close to the circuit) it will be analyzed to see if it should be included in the sequence.

If for some reason a detected repetition sequence is broken (i.e. a camera moves to change orientation thereof, the car turns around...) the deployment controller will detect that the sequence is being broken. It then jumps back to normal following of the object and again tries to detect a new sequence.

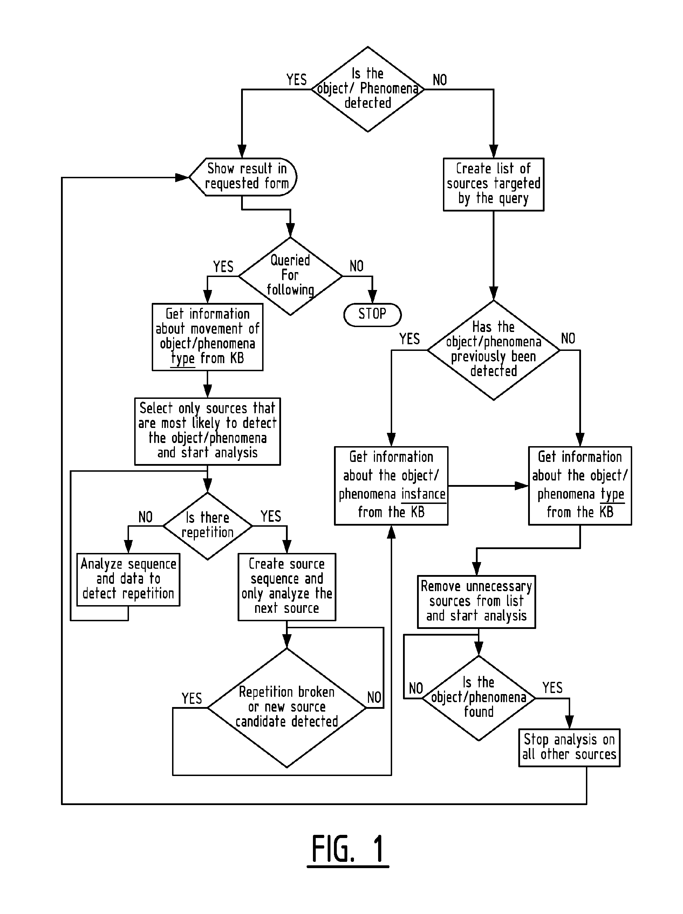

The flowchart of the deployment controller, described above, is pictured in figure 1. It is noted here that a user of the system can at any time terminate a query which will stop all analysis done by the deployment controller 2. The user can input a new query or seek instruction (a number plate of a car, a photo of a person, a heat signature of a phenomenon or the like) to end a running query, or even add a further query.

Figure 2 depicts implementation of a network. The deployment controller 2 is arranged inside the data layer 3 as it interacts with the data source apparatuses, and also employs information from the knowledge base 4. The deployment controller 2 creates deployment schemes for the necessary analyses but it does not necessarily gather the data for or from the analyses. Preferably, data from or for analysis is handled by the data layer 3 and/or the query layer 5.

For the embodiment of figure 2 a query is entered by a user into the query layer, to inform the system of network 1 to find and keep following a man with blue glasses in the city of Antwerp. The result is requested in the form of a composed real-time video stream of this man.

Preferably, the knowledge base 4 contains the means for deploying the appropriate face detector analysis in the face detectors 11 - 14 in combination with the cameras/sensors 6 - 9, or in the query layer 5, or it is added to the network 1 by the user in the form of for instance a template. In this embodiment we assume the analysis has not yet been deployed to a camera and that no previous queries deploying the query were previously sent to the camera/sensor 6 - 9.

Because the query includes an instruction to search in the city of Antwerp, the deployment controller 2 only has to run an analysis on data from cameras/sensors that are located in Antwerp. The instruction further is to search a "main" the deployment controller will look up information about "men" in the knowledge base. In this example the knowledge base contains the fact that men move on the ground so the deployment controller can than eliminate all the cameras that are aimed at the sky or at water (like camera/sensor 10).

In the situation, that the man has not yet been detected, the deployment controller will instantiate the analyzing on all of the video streams of Antwerp that are aimed at land until the man is found. In the example of figure 2, data streams from camera/sensor 10 is disregarded as being oriented at water, and for instance camera 6 is located in Brussels, so that the feed from camera 6 can also be disregarded. In feeds from the remaining cameras/sensors 7, 8 and 9 the processing continues to seek blue glasses. As soon as the man with blue glasses in Antwerp is found, e.g. in the feed from camera 7 in figure 2, all the analyzers except the one for camera 7 can be stopped and the user of the system will now start or continue to get a stream from camera 7 showing the man with the blue glasses. Now the system can derive the location of this man and insert it into its knowledgebase because the knowledgebase contains the location of the camera and what direction or orientations camera 7 it is pointed to.

Next the deployment controller will go into a phase of "following" the man. To this end the knowledge base 4 is queried for information about the way "men" move. The knowledgebase contains the fact that they follow a linear path on the ground. Consequently there after, the deployment manager 2 will start deriving which of the cameras 7, 8 and 9 will be able to detect the man also or next for instance in the movement of this person 17 and based on information or knowledge of or about the real world in the knowledge base 4, and will only start analysis on those pre-selected cameras 7, 8 and 9, that are expected to be able to "see" the man "17" in the near future, depending on his movement and the surroundings of detecting camera 7. For example, after the man 17 moves out of the line of sight of camera/sensor 7 in the direction of arrow A in figure 2, he is likely to be picked up by camera 9, which may be pre-selected on the basis of the predicted movement of the man 17 in conjunction with knowledge about the surroundings of camera/sensor 7 and the orientation of camera/sensor 9.

If the man is followed long enough (the query isn't stopped) the deployment controller 2 might be able to detect a pattern in the movement of the man 17, and a sequence of registering cameras/sensors 6 - 10. For instance, each day the man 17 goes from his house to his work and from his work to his house, and is "seen"/registered or recorded by at least one or preferably even a sequence of cameras 6 - 10. This repetition in the sequence of data source apparatuses 6 - 10, that detect the man 17, will be found by the deployment controller 2, using for instance any arbitrary type of pattern recognition analysis. The deployment controller 2 than uses this information to optimize use of the data from the source apparatuses 6 - 10 even further. For example the man walks around or along outside a field of view of camera 8 so that camera 8 will never detect him. Now the deployment controller 2 will only start instantiating analysers on camera 9, after the man 17 is detected at camera 7, for which analysis of data from cameras 6, 8 and 10 may omitted or disregarded. The cameras 6, 8 and 10 may even be prevented from transmitting the data recorded thereby.

When the man 17 does not appear in camera 9 within the timeframe he normally arrives there (he stopped or changed his direction) the deployment controller 2 will detect that the expected repetition is interrupted and/or an expectation about appearing in camera 9 does not come true. The deployment controller 2 may start up the original detection cycle again, again or for the first time analyzing data feed of camera views from all cameras/sensors (source apparatuses). Only this time the deployment controller has more accurate information about the previous location of the man 17 because he (the instance of the "men" type) is present in the knowledge base. It is to be noted that more particular information about the specific man 17 may be included in the knowledgebase, like the color of his hair, or his height or build.

The deployment controller 2 will slowly start growing a detection circle around the last location of the man until he is detected again in images from a camera/sensor at an increasing distance from the originally detecting camera/sensor 7 as the circle is enlarged. In figure 1, this increase or enlargement or growth of the detection area can be accommodated in an additional block (not shown) to be inserted in the "NO" path between the selection block "Is the object/phenomena found?" and the out-path of the block "Remove unnecessary sources from list and start analysis".

After the man 18 is again detected, the deployment controller 2 will have to start over trying to detect a repetition in his movements.

In some embodiments of the present invention, many sensor networks and camera networks are deployed, which all generate real-time video and data streams. In order to distill information or generate knowledge out of this raw data, previously according to the prior art, the streams need to be analyzed by human operators or by automated by video analysis or by complex event processors.

A challenge of this approach is how low level knowledge originating from video analysis and Complex Event Processing (CEP) can be aggregated to semantic higher level knowledge in a high-performance and scalable way. One possibility is to describe the higher level real-time knowledge in a multi-stage complex event query, but this leaves very limited space for reuse of lower level analysis and the intermediate knowledge. Alternatively it is possible to integrate real time streams into the semantic domain, resulting in hard to scale monolithic reasoning engine.

Within the framework of the present invention, this additional challenge can be addressed in the following manner. Here it should be noted that the following additional embodiments may by implemented also in other environments and technical frameworks than the one defined by and in the appended independent claims.

In the field of Complex Event Processing (CEP) data is analyzed / aggregated and attempts are made to detect patterns and composite events. These event streams can again be the input for new analysis. Many implementations of CEP engines are available commercially (e.g. StreamBase, Esper). Those known possibilities use query languages to specify these complex event analyzers. However, CEP events, going in and out of this engine, contain no real knowledge. There is no link to an ontology or semantic meaning to the events. The process of interpreting the complex event streams and deriving knowledge is left to the human user of the CEP system.

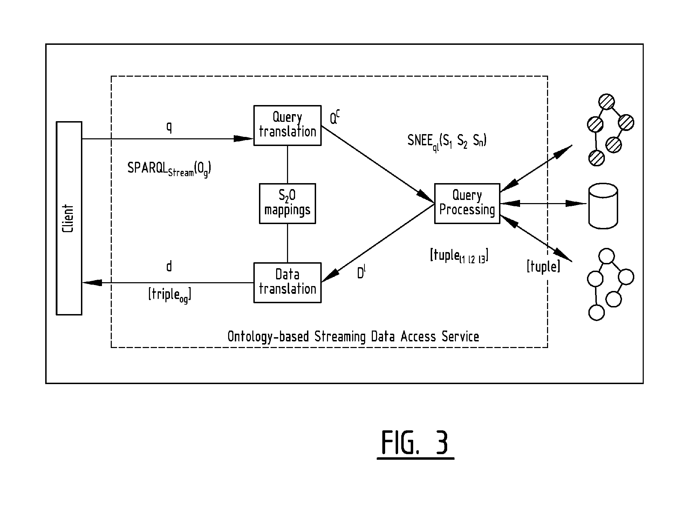

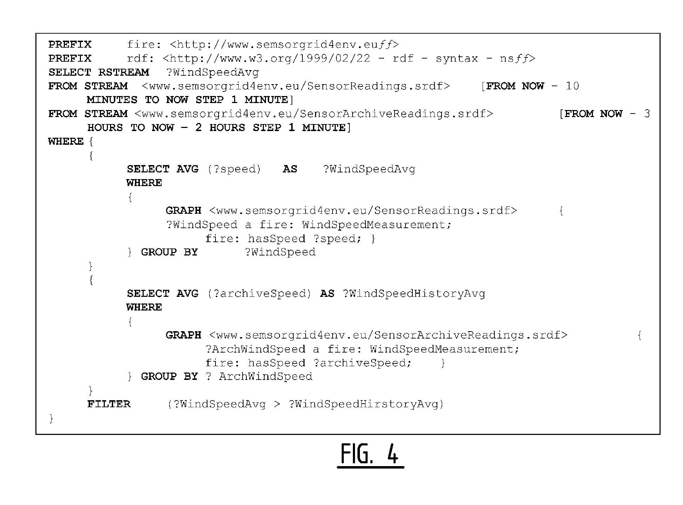

Integration/fusion of Complex Event Processing and the Semantic web is currently studied in academics, leading to Semantic Complex Event Processing frameworks such as EP-SPARQL, which add timing info to RDF triples, so that events can be queried and reasoned upon. However, the existing implementations in this field all have major limits on either the size of the knowledge or the performance of the system or even both. A better solution to resolving such and other issues is described in the paper "Enabling Ontology-based Access to Streaming Data Sources", by Jean-Paul Calbimonte et al, the principles of which are shown in figure 3. In this solution the Client can send a query using SPARQLstream, a superset of SPARQL, to the system. The system then translates the semantic query into a SNEEql query using the S20 mappings. SNEEql is a declarative continuous query language over acquisitional sensor networks, continuous streaming data, and traditional stored data. The results from the query processor are then again semantically enriched by the S20 mappings and sent back to the client. Although now it is possible to send a semantic query and receive a triple, this system is still limited to the declarative query language SNEEql. Because of the lack of integration and mere translation (SPARQLstream to SNEEql) the added value of this S20 system is limited as seen in the listing of figure 4.

This means that there is no real abstraction layer and that the SPARQLstream queries are still a lot like SNEEql queries with links to semantic concepts. Another downside to this system is the loss of efficiency that is introduced by the fact that each query has to go through two translation steps (from SPARQLstream to SNEEql and from tuple to triple). This means that for every result given to a query the tuple has to go through the S20 mappings to enrich it back to a triple.

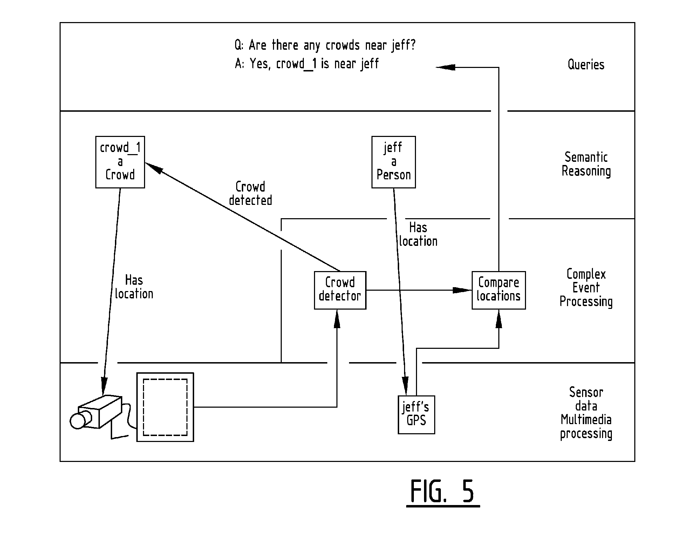

The presently proposed solution to this specific problem (which is related to but not fully dependent on the invention as defined in the appended claims) provides an incremental and scalable way to chain sensor data streams, multimedia analysis and complex event processing units to provide the observation and evidence of real world concepts, for example the existence and properties of crowds in a particular city, as represented in Figure 5. This figure 5 shows schematically a representation of sample query and corresponding composition of multimedia analyzers, sensors streams and event processing nodes.

The output of these chains of event processing units contains semantic meaning and can be reasoned upon. Semantic descriptors are used to define, query and instantiate, the individual run-time component. The presently proposed approach is to decouple the data/event processing from the semantic reasoning, which allows for full scaling of the data plane as a composition of complex event processors and multimedia analyzers. In contrast with the previously described prior art in relation to this part of the present disclosure, the hard to scale semantic reasoner is only involved in the creation and startup phase of the individual pipelines. A lookup table mechanism is used for fast lookup of the semantic meaning of aggregated results of the complex event processing chain. Beside the improved scalability of the data plane, the decoupling has the advantage the semantic system is completely agnostic to the implementation and language of the complex event processing engines.

Another major feature of a system according to this proposal is the ability to build new concepts by using a combination of existing concepts. These new concepts leverage the implementation of already known and running concepts. In practice the combination of these concepts will result in the (partial) reuse of chains of CEP components and multimedia analyzers, providing an incremental mechanism to mash-up these data processing components. The dynamic data will never have to go all the way up to the knowledge base, which would hurt the performance.

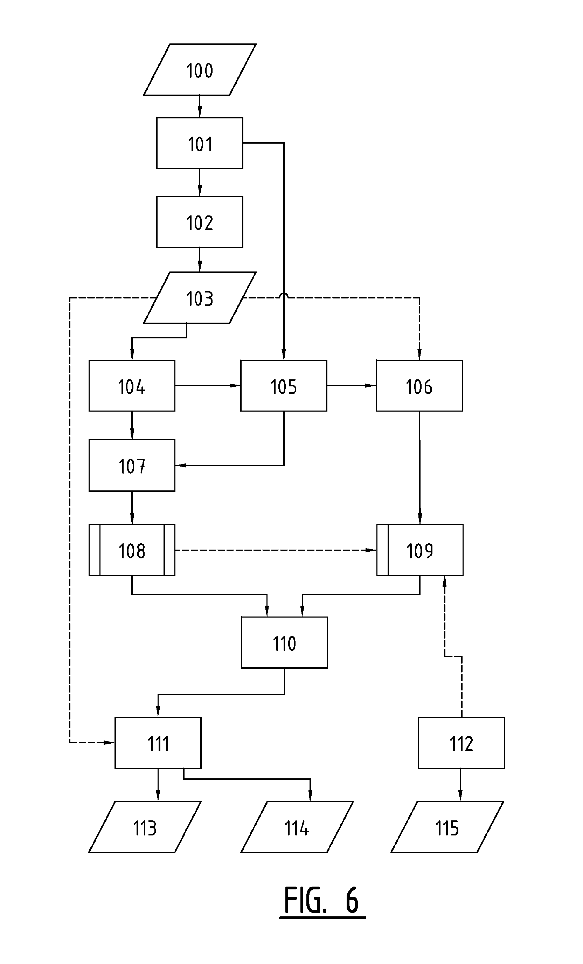

A first embodiment of this proposal is represented in figure 6, which represents a query processing data flow. Users trigger the system as depicted in figure 6 by entering queries to observe the world [100]. Such a query could be, for example, "show me the crowds near Jeff". This query is targeting two types of data: one type that is fixed and is of class type nature (crowd and Jeff) and other data that is variable (proximity as function of location of the crowd and Jeff) that will vary over time, as represented in see figure 5. Block [101] indicates separation into of a static part to a standard query description (e.g. SPARQL SELECT) and of a dynamic part to complex event processing (CEP) statements (e.g Esper EPL). This operation can be as simple as
(1) extracting the literal embedded CEP code from the SPARQ;L but can also involve a
(2) lexical analysis of the query; or
(3) some natural language processing that split the type part from the data processing part.

The static part (e.g. standard SPARQL) can be reasoned upon by a standard reasoner [102] (e.g. Jena) that contains the semantic descriptions of known concepts and how to observe them, descriptors describing the available multimedia functions. The output of this operation is the query result from the perspective of static part. In the present example this may mean the potential crowds in the search range around Jeff.

This result is converted to a table that maps the (static) query result to the variables in the overall query [103]. For each entry the dependency chain is generated [104]. The dependency chain is a complete description of all steps necessary to do the valid observation. In the present example, detecting crowds involves face detection on a number of streams coming from security cameras in the surroundings of Jeff. The detected faces have to be summed and compared to a threshold that defines the minimum amount of people to talk about a crowd. These descriptions go to the pipeline construction process [107]. This pipeline process converts the full dependency chain to a proper list of API call of the multimedia (analysis) platform [108]. This can be any multimedia platform running in the cloud or locally hosted as long it can be managed using a web service API. The actual implementation and details of this platform are external to our system.

The full dependency chain [104] contains also the descriptions of the CEP steps required in the observation. Process [105] evaluates the individual CEP steps and extracts the annotations that control instantiation of the CEP statements, e.g. some CEP statements aggregate data coming from different sources, others dig into events coming from individual data sources. These annotation are used on the transformation and binding of the CEP statements [106]. This process takes the CEP statement template, and converts it to deployable descriptions that bind to real instance(s) of data source. These statements can immediately be deployed on a CEP engine [109]. This engine can be any CEP engine and may be external relative to the present system. From this moment on, the multimedia processes and CEP engines continue in an orchestrated way trying to observe the world to answer the original query. This is performed preferably without any further involvement of the semantic system.

When then the processing pipeline leads to a matching observation, this event sinks in the event collector [110]. Using the tables [103] these event can be semantically correlated to the original query, depending on the nature of the observed concept (short living or long living instances) [113]. These facts can be fed back into the knowledge base. In case the requested output is multimedia stream, the url of the resulted composition can be sent back to the application [114], in order to show the live video on screen. In the present example the objective was to see the crowds near Jeff, so the application requires the URL of the composited stream merging all views on all crowds around Jeff.

The last type of query results in the visualization of a live changing variable. This is achieved with a peek mechanism [112] right into the running CEP process.

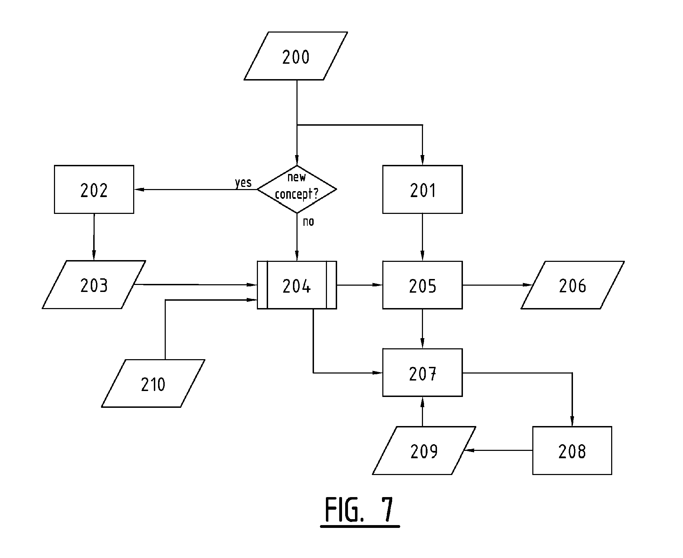

A second embodiment of this proposal is represented schematically in figure 7, which represents concept construction and reasoning. This second embodiment relates to a manner of the method how new concepts can be added to the system and how one concept can build on top of another, as depicted in figure 7. When a new query is or has been entered in the system, it is detected if the query describes a new concept. If this is the case, the concept/query is parsed with a matching template [202] and converted to rules [203] compatible with the reasoning engine of choice (e.g. Jena) [204]. In case the query is or was based on a known concept, the query is forwarded for reasoning to generate the CEP and multimedia dependency chains. The incoming query/concept is parsed to extract the query variables [201] as input of the table construction [205]. The main function of the reasoner is to create complex event processing and multimedia analysis compositions using the rules describing concepts [203], installation information of the sensors and multimedia streams [210]. This output is goes to an optimization function [207] that keeps a record of the actively observed concepts [209]. This information is contains all the required information to launch new pipelines or segments of pipelines in an optimal way [208]. With every new query the process repeats itself.

The present proposals provide a generic method to create applications based on chaining (real-time) multimedia analyzers and complex event processing units. This method can be combined with any (cloud) multimedia platform or complex event processing unit, as long a web service API is (or can be) provided. This invention adds intelligence to these systems to explore and apply run-time reuse and sharing of the data processing units. These optimizations can reduce cloud processing and/or network traffic. The clear separation of a data plane and a control plane allows for much better scalability opportunities of the solution.

Irrespective of the above description of preferred embodiments of the present invention and the additionally proposed implementations in relation to figures 3 - 7, it is noted here that numerous additional and/or alternative embodiments will present themselves naturally to the skilled person on the basis of the following claims and/or the preceding description, where such alternative and/or additional embodiments may be less or even more preferred than those actually described. Therefrom it follows, that the scope of the present invention is exclusively defined in the appended claims.

## Claims

1. A method of selecting a source apparatus from a plurality of source apparatuses, which generate data, for processing of said data by a processing device, wherein the plurality of source apparatuses and the processing device are connected in a network, comprising the steps of:
- selecting a source apparatus from the plurality of source apparatuses as a selected source apparatus for processing of data from the selected source apparatus by the processing device, the selecting being based on criteria related to content of data from the selected source apparatus;
- pre-selecting a source apparatus from the plurality of source apparatuses as a pre-selected source apparatus for subsequent processing of data from the pre-selected source apparatus by the processing device, based on at least criteria related to real world knowledge information; and
- selecting a source apparatus from the selected source apparatus and the pre-selected source apparatus as the selected continued source apparatus for continued processing of data from the selected continued source apparatus by the processing device.

2. The method according to claim 1, wherein the step of selecting a source apparatus comprises disregarding at least one source apparatus from the plurality of source apparatuses, based on criteria related to real world knowledge information.

3. The method according to claim 1 or 2, further comprising ending the step of selecting a source apparatus from the plurality of source apparatuses as a selected source apparatus, when a source apparatus is found to comply with the criteria related to content of processed data there from.

4. The method according to any of the preceding claims, further comprising the step of returning to the step of selecting a source apparatus from the plurality of source apparatuses as a selected source apparatus, when the step of selecting a source apparatus from the selected source apparatus and the pre-selected source apparatus fails to yield a selected continued source apparatus.

5. A network deployment controller adapted to be connected over a network at least to a plurality of source apparatuses, which generate data for processing and to a processing device configured to process the data generated by at least one of the plurality of source apparatuses,
wherein the deployment controller is configured for:
- selecting a source apparatus from the plurality of source apparatuses as a selected source apparatus for processing of data from the selected source apparatus by the processing device, the selecting being based on criteria related to content of data from the selected source apparatus;
- pre-selecting a source apparatus from the plurality of source apparatuses as a pre-selected source apparatus for subsequent processing of data from the pre-selected source apparatus by the processing device, based on at least criteria related to real world knowledge information; and
- selecting a source apparatus from the selected source apparatus and the pre-selected source apparatus as the selected continued source apparatus for continued processing of data from the selected continued source apparatus by the processing device.

6. The network deployment controller according to claim 5, wherein the network is one or more than one of a cloud system, a wired network, a wireless network.

7. The network deployment controller according to claim 5 or 6, wherein the plurality of source apparatuses comprises a set of cameras, such as surveillance cameras or face detectors, and the processing device is configured for image processing of data from at least one camera of the set of cameras.

8. The network deployment controller according to claim 5, 6 or 7, wherein the deployment controller is configured for, in the step of selecting a source apparatus: disregarding at least one source apparatus from the plurality of source apparatuses, based on criteria related to real world knowledge information.

9. The network deployment controller according to any of preceding claims 5 - 8, wherein the deployment controller is configured for ending the step of selecting a source apparatus from the plurality of source apparatuses as a selected source apparatus, when a source apparatus is found to comply with the criteria related to content of processed data there from.

10. The network deployment controller according to any of the preceding claims, wherein the deployment controller is configured for:
returning to the step of selecting a source apparatus from the plurality of source apparatuses as a selected source apparatus,
when the step of selecting a source apparatus from the selected source apparatus and the pre-selected source apparatus fails to yield a selected continued source apparatus.

11. The method according to claims 1 - 4 or the network according to any of preceding claims 5 - 10, wherein the real world knowledge information is information from the group, comprising: information on the nature of the surroundings of a source apparatus; orientations of individual sensors, detectors and cameras; and the like.

12. A network, comprising:
- a plurality of source apparatuses, which generate data for processing;
- a processing device configured to process the data generated by at least one of the plurality of source apparatuses; and
- a deployment controller according to any one of the preceding claims 5 - 10,
wherein the plurality of source apparatuses, the processing device and the deployment controller are connected in the network, and wherein the deployment controller is configured for:
- selecting a source apparatus from the plurality of source apparatuses as a selected source apparatus for processing of data from the selected source apparatus by the processing device, the selecting being based on criteria related to content of data from the selected source apparatus;
- pre-selecting a source apparatus from the plurality of source apparatuses as a pre-selected source apparatus for subsequent processing of data from the pre-selected source apparatus by the processing device, based on at least criteria related to real world knowledge information; and
- selecting a source apparatus from the selected source apparatus and the pre-selected source apparatus as the selected continued source apparatus for continued processing of data from the selected continued source apparatus by the processing device.

13. A record carrier comprising a program for performing the method according to any of claims 1 - 4, when executing the program on a computer.
